(19) Europäisches Patentamt
European Patent Office
Office européen des brevets

(11) Veröffentlichungsnummer : **0 378 515 B1**

(12) # EUROPÄISCHE PATENTSCHRIFT

(45) Veröffentlichungstag der Patentschrift :
03.07.91 Patentblatt 91/27

(51) Int. Cl.⁵ : **E03C 1/02, F16L 3/00**

(21) Anmeldenummer : **90810010.0**

(22) Anmeldetag : **04.01.90**

(54) Übergangsstück zum Anschliessen einer sanitären Armatur an wenigstens eine Rohrleitung.

(30) Priorität : **09.01.89 CH 56/89**

(43) Veröffentlichungstag der Anmeldung :
**18.07.90 Patentblatt 90/29**

(45) Bekanntmachung des Hinweises auf die
Patenterteilung :
**03.07.91 Patentblatt 91/27**

(84) Benannte Vertragsstaaten :
**AT BE CH DE DK ES FR GB GR IT LI LU NL SE**

(56) Entgegenhaltungen :
**DE-A- 3 025 601**
**DE-A- 3 509 600**

(56) Entgegenhaltungen :
**FR-A- 2 059 614**
**US-A- 3 271 059**
**US-A- 4 232 421**
**US-A- 4 314 687**

(73) Patentinhaber : **Geberit AG**
**Schachenstrasse 77**
**CH-8645 Jona (CH)**

(72) Erfinder : **Lechner, Peter**
**Porthofstrasse 41**
**CH-8645 Jona (CH)**

(74) Vertreter : **Groner, Manfred et al**
**Patentanwalts-Bureau Isler AG Postfach 6940**
**CH-8023 Zürich (CH)**

## Beschreibung

Die Erfindung betrifft ein aus der DE-A-3509600 bekanntes System nach dem Oberbegriff des unabhängigen Patentanspruchs 1.

Die allgemein bekannten Uebergangsstücke von Systemen dieser Art besitzen jeweils einen Flansch, an dem das Uebergangsstück an einem Träger angeschraubt wird. Solche Flanschverbindungen sind an schlecht zugänglichen Stellen vergleichsweise zeitaufwendig und schwierig zu erstellen. Lösen sich die Schrauben, so ist eine aufwendige Reparatur erforderlich. Nachteilig ist ebenfalls, dass solche Flanschverbindungen den Körperschall ungehindert übertragen.

Durch die DE-A-35 09 600 ist eine Winkelverlängerung für den Anschluss von Ueberputzarmaturen an unter Putz verlegte Wasserleitungsrohre bekannt geworden. An der Winkelverlängerung ist ein Haltefuss angebracht, der in eine Nut einer Halteschiene eingeschoben ist. Auch diese Verbindung überträgt den Körperschall ungehindert und ist durch die zusätzlich notwendige Halteschiene in der Herstellung aufwendiger als die oben erwähnten Flanschverbindungen.

Durch die US-A-3,271,059 ist ein System bekannt geworden, mit dem zwei mit Oeffnungen versehene Panele miteinander verbunden werden können. Gemäss Spalte 3, Zeile 14-17, sind diese Panele insbesonders Teile eines Motorfahrzeuges.

Der Erfindung liegt die Aufgabe zugrunde, ein System der genannten Gattung zu schaffen, das die oben genannten Nachteile vermeidet und somit wesentlich einfacher und ohne Werkzeuge am Träger befestigt werden kann und das den Körperschall im geringeren Mass von der Armatur auf den Träger überträgt. Die Aufgabe wird erfindungsgemäss durch den Anspruch 1 gelöst.

Das Uebergangsstück des Systems lässt sich in einfacher Weise und wesentlich schneller als nach dem Stand der Technik an einem Träger befestigen. Da ein Verbindungsflansch nicht mehr notwendig ist, lässt sich das Uebergangsstück kompakter herstellen.

Eine besonders einfache und auch von Hand durchführbare Deformation des Halteteils ist dann besonders einfach möglich, wenn gemäss einer Weiterbildung der Erfindung das Halteteil einen radial abstehenden Lappen aufweist. Vorteilhafte Weiterbildungen der Erfindung ergeben sich aus den übrigen abhängigen Ansprüchen. Ein Ausführungsbeispiel der Erfindung wird nachfolgend anhand der Zeichnungen näher erläutert. Es zeigen :

Fig. 1 ein Teilschnitt durch ein an einem Träger angebrachtes Uebergangsstück,

Fig. 2 eine Teilansicht des Trägers,

Fig. 3a und 3b Ansichten des Halteteils.

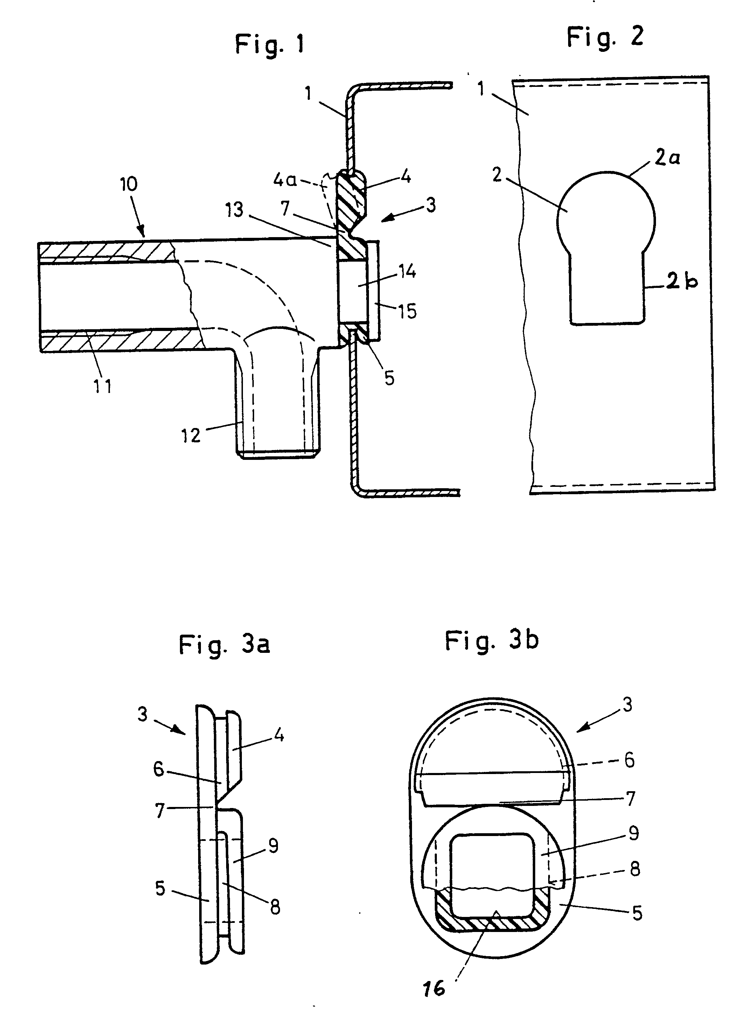

Das in Fig. 1 gezeigte Uebergangsstück weist ein Gussstück 10 mit einem Innengewinde 11 für den Anschluss einer hier nicht gezeigten Armatur und ein Aussengewinde 12 für den Anschluss einer hier ebenfalls nicht gezeigten Rohrleitung auf. Am Stück 10 ist ein Ansatz 13 angebracht, in dem eine unrunde Nut 14 eingearbeitet ist. In die Nut 14 ist umgreifend ein Halteteil 3 aus Gummi eingesetzt, das einen Lappen 4 aufweist, der radial über den Ansatz 13 hinausragt und der von Hand in die gestrichelt gezeichnete Position 4 zurückgelegt werden kann.

Das Halteteil 3 besitzt am Umfang eine obere, teilkreisförmige Furche 6 und eine untere unrunde Furche 8. Entsprechend geformte Randbereiche 2a und 2b besitzt eine Oeffnung 2 in einem Träger 1, der beispielsweise aus Metallblech hergestellt ist. Der äussere Rand 15 der Nut 14 ist breiter als die Oeffnung 2 im Bereich des Randbereiches 2b, aber kleiner als die Oeffnung 2 im Bereich des Randbereiches 2a.

Damit der Lappen 4, von Hand vergleichsweise leicht nach hinten umgelegt werden kann, besitzt das Halteteil 3 am Ansatz des Lappens 4 eine Stelle mit verminderter Stärke. Die Stelle 7 bildet somit eine Art Scharnier.

Um das Zwischenstück am Träger 1 zu befestigen, wird der Rand 15 mit aufgesetztem Halteteil 3 in der Höhe des Randbereiches 2a unter leichter Schrägstellung in die Oeffnung 2 eingeschoben. Nun wird das Uebergangsstück nach unten bewegt, wobei der Randbereich 2b in die Furche 8 einfährt. Unter allmählicher Gradstellung wird das Uebergangsstück im Randbereich 2b nach unten bewegt bis das Halteteil 3 am unteren Rand der Oeffnung 2 ansteht. Abschliessend wird der Lappen 4 aus der Position 4a (Fig. 1) in die Oeffnung 2 gedrückt. Das Uebergangsstück ist nun für den Anschluss der Armatur und der Rohrleitung bereit.

Die Nut 14 ist entsprechend einer Oeffnung 16 im Halteteil 3 unrund ausgebildet. Dadurch wird auf einfache Weise vermieden, dass das Stück 10 im Halteteil 3 verdreht werden kann. Da der Rand 15 breiter ist als der Randbereich 2b, kann das Uebergangsstück auch mit grossen Kräften nicht aus der Oeffnung 2 herausgezogen werden. Die Verbindung zwischen dem Uebergangsstück und dem Träger 1 ist nötigenfalls lösbar, kann sich jedoch durch Fibrationen am Träger und am Leistungssystem nicht von selbst lösen. Das Haltestück 3 bildet zudem eine flüssigkeitsdichte Dichtung zwischen dem Träger 1 und dem Stück 10. Zudem ist das Halteteil ein elektrischer Isolator zwischen dem Stück 10 und dem Träger 1.

## Ansprüche

1. System mit einer an einem Ende eines Uebergangsstücks angeschlossenen sanitären Armatur und wenigstens einer an dessen anderem Ende angeschlossenen Rohrleitung, wobei das Uebergangsstück Mittel zu seiner Befestigung an einem Träger (1) aufweist, dadurch gekennzeichnet, dass an einem am Uebergangsstück angeordneten Ansatz (13) ein radial vorstehendes und flexibles Halteteil (3) aus schalldämmendem Kunststoff angebracht ist, dass das Halteteil (13) in eine Oeffnung (2) am Träger (1) eingesetzt und darin formschlüssig fixiert ist und dass das Halteteil (3) zur Herstellung seiner formschlüssigen Verbindung zum Träger (1) durch Deformation in seinem Umfang verkleinerbar ist.

2. System nach Anspruch 1, dadurch gekennzeichnet, dass das Halteteil (3) einen radial vom Ansatz (13) abstehenden Lappen (4) aufweist.

3. System nach Anspruch 2, dadurch gekennzeichnet, dass der Lappen (4) um einen Bereich (7) mit verminderter Wandstärke nach hinten verschwenkt werden kann.

4. System nach einem der Ansprüche 1 bis 3, dadurch gekennzeichnet, dass das Halteteil (3) am Umfang eine Furche (6, 8) aufweist, in die der Rand der Oeffnung (2) einzusetzen bestimmt ist.

5. System nach einem der Ansprüche 1 bis 4, dadurch gekennzeichnet, dass der Ansatz (13) am Umfang eine Nut (14) aufweist, in die das Halteteil (3) lösbar eingesetzt ist.

6. System nach Anspruch 5, dadurch gekennzeichnet, dass die Nut (14) unrund ist und das Halteteil (3) eine entsprechende Oeffnung (16) aufweist.

7. System nach einem der Ansprüche 4 bis 6, dadurch gekennzeichnet, dass eine obere Furche (6) des Halteteils (3) teilkreisförmig ausgebildet ist und in einem entsprechend geformten Randbereich (2a) der Oeffnung (2) einzusetzen ist.

8. System nach einem der Ansprüche 4 bis 7, dadurch gekennzeichnet, dass eine untere Furche (8) unrund ausgebildet und in einen entsprechenden Randbereich (2b) der Oeffnung (2) einschiebbar ist.

9. System nach einem der Ansprüche 1 bis 8, dadurch gekennzeichnet, dass das Halteteil (3) aus Gummi hergestellt ist.

10. System nach einem der Ansprüche 1 bis 9, dadurch gekennzeichnet, dass der äussere Rand (15) der Nut (14) kleiner als ein oberer Bereich (2a) der Oeffnung (2) aber grösser als ein unterer Bereich (2b) der Oeffnung (2) ist.

## Revendications

1. Système comportant un élément de robinetterie sanitaire raccordé à une extrémité d'un élément de raccordement, et au moins une conduite tubulaire raccordée à l'autre extrémité de cet élément de robinetterie, l'élément de raccordement comportant des moyens pour sa fixation à un support (1), caractérisé en ce qu'un élément de retenue radial saillant flexible (3) réalisé en une matière plastique insonorisante est monté sur un embout saillant (13) prévu sur l'élément de raccordement, que l'élément de retenue (13) est inséré dans une ouverture (2) ménagée dans le support (1) et y est fixé selon une liaison par complémentarité de formes et que, pour l'établissement de la liaison par complémentarité de formes entre l'élément de retenue (3) et le support (1), la circonférence de l'élément de retenue peut être réduite par déformation.

2. Système selon la revendication 1, caractérisé en ce que l'élément de retenue (3) possède une languette (4), qui fait saillie radialement par rapport à l'embout saillant (13).

3. Système selon la revendication 2, caractérisé en ce qu'on peut faire pivoter la languette (4) vers l'arrière, autour d'une zone (7) possédant une épaisseur réduite.

4. Système selon l'une des revendications 1 à 3, caractérisé en ce que l'élément de retenue (3) comporte, sur son pourtour, une gorge (6, 8), dans laquelle le bord de l'ouverture (2) est destiné à s'insérer.

5. Système selon l'une des revendications 1 à 4, caractérisé en ce que l'embout saillant (13) possède, sur son pourtour, une rainure (14), dans laquelle l'élément de retenue (3) est inséré de façon amovible.

6. Système selon la revendication 5, caractérisé en ce que la rainure (14) n'est pas circulaire et que l'élément de retenue (3) possède une ouverture correspondante (16).

7. Système selon l'une des revendications 4 à 6, caractérisé en ce qu'une gorge supérieure (6) de l'élément de retenue (3) possède une forme partiellement circulaire et doit être insérée dans une zone marginale (2a) de forme correspondante de l'ouverture (2).

8. Système selon l'une des revendications 4 à 7, caractérisé en ce qu'une gorge inférieure (8) est réalisée avec une forme non circulaire et peut être appliquée sur une zone marginale correspondante (2b) de l'ouverture (2).

9. Système selon l'une des revendications 1 à 8, caractérisé en ce que l'élément de retenue (3) est réalisé en caoutchouc.

10. Système selon l'une des revendications 1 à 9, caractérisé en ce que le bord extérieur (15) de la rainure (14) est plus petit qu'une partie supérieure (2a) de l'ouverture (2), est plus grand qu'une partie inférieure (2b) de l'ouverture (2).

## Claims

1. System having a sanitary armature, connected to one end of a crossing element, and at least one conduit, connected to its other end, the crossing element having means for fastening it to a support (1), characterised in that a radially projecting and flexible holding part (3) made of sound-proofing plastic is mounted on an attachment (13) arranged on the crossing element, in that the holding part (13) is inserted in an aperture (2) on the support (1) and fixed positively therein, and that the holding part (3) can be reduced in its circumference by deformation for producing its positive connection with the support (1).

2. System according to Claim 1, characterised in that the holding part (3) has a tab (4) protruding radially from the attachment (13).

3. System according to Claim 2, characterised in that the tab (4) can be swivelled backwards around a region (7) with reduced wall thickness.

4. System according to one of Claims 1 to 3, characterised in that the holding part (3) has on the circumference a furrow (6, 8), into which the edge of the aperture (2) is intended to be inserted.

5. System according to one of Claims 1 to 4, characterised in that the attachment (13) has on the circumference a groove (14), into which the holding part (3) is inserted so as to be detachable.

6. System according to Claim 5, characterised in that the groove (14) is non-circular and the holding part (3) has a corresponding aperture (16).

7. System according to one of Claims 4 to 6, characterised in that an upper furrow (6) of the holding part (3) is of partially circular construction and is to be inserted in a correspondingly shaped edge region (2a) of the aperture (2).

8. System according to one of Claims 4 to 7, characterised in that a lower furrow (8) is of non-circular construction and can be pushed into a corresponding edge region (2b) of the aperture (2).

9. System according to one of Claims 1 to 8, characterised in that the holding part (3) is made of rubber.

10. System according to one of Claims 1 to 9, characterised in that the outer edge (15) of the groove (14) is smaller than an upper region (2a) of the aperture (2), but larger than a lower region (2b) of the aperture (2).

Fig. 1

Fig. 2

Fig. 3a

Fig. 3b